(19) Europäisches Patentamt
European Patent Office
Office européen des brevets

(11) **EP 1 267 537 A2**

(12) **EUROPEAN PATENT APPLICATION**

(43) Date of publication:
**18.12.2002 Bulletin 2002/51**

(51) Int Cl.7: **H04L 27/26**, H04H 1/00

(21) Application number: **02021383.1**

(22) Date of filing: **18.05.1995**

(84) Designated Contracting States:
**DE GB**

(30) Priority: **20.05.1994 JP 10655994**

(62) Document number(s) of the earlier application(s) in accordance with Art. 76 EPC:
**95107630.6 / 0 683 576**

(71) Applicant: **Hitachi, Ltd.**
**Chiyoda-ku, Tokyo 101-8010 (JP)**

(72) Inventors:
• **Nogami, Hiroshi**
**253 Chigasaki-shi, Kanagawa (JP)**
• **Okamoto, Teiji**
**251 Fujisawa-shi, Kanagawa (JP)**

(74) Representative: **Altenburg, Udo, Dipl.-Phys. et al**
**Patent- und Rechtsanwälte**
**Bardehle - Pagenberg - Dost - Altenburg - Geissler - Isenbruck,**
**Galileiplatz 1**
**81679 München (DE)**

Remarks:
This application was filed on 24.09.2002 as a divisional application to the application mentioned under INID code 62.

(54) **An OFDM digital broadcasting system, and a transmission system and a receiving system used for digital broadcasting**

(57) A transmission system used for digital broadcasting by the OFDM method, comprising an encoder to encode information from plural information sources; a multiplexer; a communication channel encoder; a selector; a time base; a frame synchronization symbol generator; a pilot symbol generator; and an inverted fast Fourier transformer, and transmitting a pilot signal comprising plural frequencies set orthogonally with each another, and a receiving system for said transmission system being provided with at least a means to estimate the timing offset or frequency offset, or both offsets to occur in itself by estimating the frequency and phase of the pilot signal using the output of the Fourier transformation carried out for said received pilot signal and a means to control the sampling timing or the frequency/ phase correction, or a means to control both of them to acquire the timing or frequency synchronization, or both synchronizations using those estimated values.

FIG. 1

EP 1 267 537 A2

**Description**

BACKGROUND OF THE INVENTION

This invention is related to a digital broadcasting system, and a transmission system and a receiving system used for digital broadcasting, especially to a broadcasting system, and a transmission system and a receiving system used for broadcasting suitable for transmitting/receiving audios, images, data, and other information using a modulating system OFDM that uses plural frequencies set orthogonally with each another.

When information such as audios, images, data, etc. is received on a vehicle from a digital broadcasting system, received waves are often deteriorated, for example, recognized as signal attenuation to be caused by the interference of broadcast waves reflected on buildings. A transmission/receiving system for digital broadcasting to reduce such the deterioration is reported in IEEE Transactions on Consumer Electronics Vol. 35 No. 3 pp. 493 to 503 (August, 1989). In this transmission method, broadcast signals are dispersed in plural broadcast waves whose transmission rate is low.

The transmission method of the said transmission and receiving system is called the Orthogonal Frequency Division Multiplexing (OFDM). When a symbol is to be transmitted using this OFDM method, a guard interval which is a fraction of one symbol time is put before the symbol to reduce the influence of delayed waves. The time of one symbol to be transmitted actually becomes longer by the length of the guard interval. Hereafter, the original one symbol time in such the method will be referred to as one effective symbol time in this specification, and the time to transmit one symbol actually (one effective symbol time + guard interval) will be referred to as one transmission symbol time.

In general, in the transmission method to disperse this broadcast signal in plural low transmission rate broadcast waves, at least more than a few tens of frequencies are used. And, those frequencies are set orthogonally with each other so that they may not interfere each another even when the frequency interval is set narrowly.

If such the characteristics that transmission frequencies are set orthogonally are used, inverse Fourier transformation and Fourier transformation can be used in both transmission and receiving systems to realize the said broadcasting system.

To restore broadcast signals such as required audios, images, or data in the OFDM system that disperses broadcast signals in plural frequencies to transmit them, the frequency and timing must be synchronized with transmission signals at first.

Especially, in case of receiving signals on a vehicle, such the synchronization is often shifted, since the receiving status is changed abruptly. Thus, such the synchronization must be adjusted each time a shift is detected.

When receiving broadcast signals, the receiving frequency channel or program is often changed, and thus such the synchronization must be adjusted immediately each time the receiving frequency channel or program is changed.

It takes a certain degree of time to acquire such the synchronization, and if any one of the frequency and timing synchronizations is lost, transmission data cannot be restored. To avoid such the error, therefore, the frequency synchronization and the timing synchronization must be acquired as early as possible.

Summery Of The Invention

The purpose of this invention is to provide a digital broardcasting system, a transmission system and a receiving system used for digital broadcasting, which can restore broadcast signals by acquiring the synchronization in the broadcasting system that uses the OFDM method to transmit signals.

To achieve the purpose of this invention, this invention uses the output of the Fourier transformation for received signals to estimate the timing offset or frequency offset, or both offsets in the receiving system, and acquires the timing synchronization or frequency synchronization, or both synchronizations using those estimated values.

To achieve the purpose of this invention, for every fixed time period the transmission system transmits the pilot symbol comprising two or more frequencies whose frequency intervals are 4/(NT) or more, and comprizing only the pilot signals, where 1/(NT) is the transmission frequency interval for transmitting symbols other than that of the pilot signals.

Furthermore, to achieve the purpose of this invention, received signals are multiplied by a window function such as a Hanning function except for proper rectangle ones when Fourier transformation is carried out to estimate the timing and frequency offsets in the said receiving system.

Furthermore, to achieve the purpose of this invention, hardjudgment(hard decision or slicing) is carried out together with Fourier transformation for received signals to detect and use the difference between the phases of the hard-judgment results and received signals in the said receiving system.

Furthermore, to achieve the purpose of this invention, Fourier transformation is carried out so that the frequency interval of the output may become 1/4 or under that of the transmission frequencies when the timing and/or frequency synchronization is not acquired, to acquire the timing synchronization and the frequency synchronization.

Furthermore, to achieve the purpose of this invention, sampling of received signals for which Fourier transformation is to be carried out to acquire the said synchronization is started at a time within the guard interval.

Furthermore, to achieve the purpose of this invention, the condition of M/L $\geq$ 4 is satisfied when the sampling time for received signals that are to be Fourier-transformed is 1/L of one effective symbol time and the pilot signal frequency interval is M times that of the transmission frequencies.

Furthermore, to achieve the purpose of this invention, Fourier transformation is carried out only for $f_K$ - (h + 1)/(NT) to $f_K$ + (h + 1)/(NT), which is the neighborhood of the pilot frequency $f_K$ to acquire or track the timing synchronization or frequency synchronization, or both synchronizations when the maximum frequency offset $\Delta F_m$ from the transmission pilot signal frequency $f_k$, to be expected in the receiving system is represented as $|\Delta F_m| \leq (1 + 2h)/(2NT)$ using a positive integer h. 1/(NT) is the transmission frequency interval, N is the total number of transmission frequencies, and T is the basic timing period assumed respectively in the transmission system.

Furthermore, to achieve the purpose of this invention, the frequencies $f_1$ and $f_2$ used for the pilot signal are set so that the condition of $1/|\tau'| \geq 2 |f_2 - f_1|$ may be satisfied when the maximum value of the timing phase offset to be expected in the receiving system is $\tau'$.

In the digital broadcasting system that transmits signals using frequencies that are set orthogonally with each another, fast Fourier transformation (FFT) can be carried out to demodulate all the required frequencies. If both frequency and timing are already synchronized, the output of the Fourier transformation can be assumed as the demodulated output of the required frequencies.

On the other hand, if the synchronizations are not acquired yet, a proper pilot symbol is transmitted. If the frequencies of the transmitted pilot symbol are already known, the offset of those frequencies and the timing offset can be estimated according to the demodulated output of Fourier transformation. And according to these estimated values, the said synchronizations can be corrected.

The offset can be estimated more accurately by using window functions including the Hanning function except for the rectangles.

The estimation can be made more accurately if, when a pilot symbol comprising plural frequencies is transmitted, the frequency interval is of four or more frequencies used for the output of Fourier transformation. Therefore, if the frequency interval used for the Fourier transformation output in the receiving system is the same as that of the transmission frequencies, the pilot signals of the pilot symbol are given to have intervals of four or more frequencies in the transmission system.

On the other hand, if the pilot signal and its adjacent data signal are transmitted concurrently from the said transmission system and the frequency interval between them is not sufficient, then the frequency interval of the Fourier transformation output is set to 1/4 or under in the receiving system so that the same effectiveness as the frequency interval can be obtained.

If the sampling time for the received signal for which Fourier transformation is to be carried out is 1/L of one effective symbol time and the pilot signal frequency interval is M times the transmission frequency interval (1/(NT)), then it is only needed to set the relationship between L and M so that M/L $\geq$ 4 may be satisfied.

The synchronization can be acquired more easily if it is avoided that sampling of one symbol is overlapped on the next symbol. This is realized by starting sampling of the pilot signal in the guard interval when Fourier transformation is carried out to acquire the synchronization.

Fourier transformation result output is not needed necessarily for every transmission frequency to estimate the frequency and timing offsets in the receiving system. It is only needed for the frequencies in the neighborhood of the pilot signal frequency $f_k$. With this, the operation in the receiving system can be simplified. Concretely, when the maximum frequency offset to be expected in the receiving system is represented as $|\Delta F_m| \leq (1 + 2h)/(NT)$ using a positive integer h, it is only needed to calculate the Fourier transformation output from within $f_k$ - (h + 1)/(NT) to $f_k$ + (h + 1)/(NT).

Furthermore, when the timing phase offset maximum value is $\tau'$, the timing offset can be corrected more accurately by satisfying the relationship between the pilot signal frequencies $f_1$ and $f_2$ as $1/|\tau'| \geq 2|f_2 - f_1|$.

In addition, the said receiving system performance can be more improved by carrying out hard-judgment together with Fourier transformation for received signals and by detecting and using the difference between the phases of the hard-judgment result and received signals.

As explained above, the use of the transmission system and the receiving system for digital broadcasting of this invention for a digital broadcasting system that transmits signals using plural frequencies set orthogonally with each another will provide a digital broadcasting system, and a transmission system and a receiving system for digital broadcasting that can acquire the synchronizations and restore broadcast signals speedily.

Brief Description of the Drawings

Figure 1 shows the block diagram of the transmission system for digital broadcasting 1a, which is explained in the first embodiment of this invention.

Figure 2 shows the configuration of one frame, which is explained in the first embodiment of this invention.

Figure 3 shows the configuration of the pilot symbol signal, which is explained in the first embodiment of this invention.

Figure 4 shows the block diagram of the receiving system for digital broadcasting 2a, which is explained in the first embodiment of this invention.

Figure 5 shows the signal sampling method, which is explained in the first embodiment of this invention.

Figure 6 shows the block diagram of the receiving system for digital broadcasting 2b, which is explained in the second embodiment of this invention.

DESCRIPTION OF THE PREFERRED EMBODIMENTS

Hereafter, this invention will be explained more in detail using some drawings.

(First Embodiment)

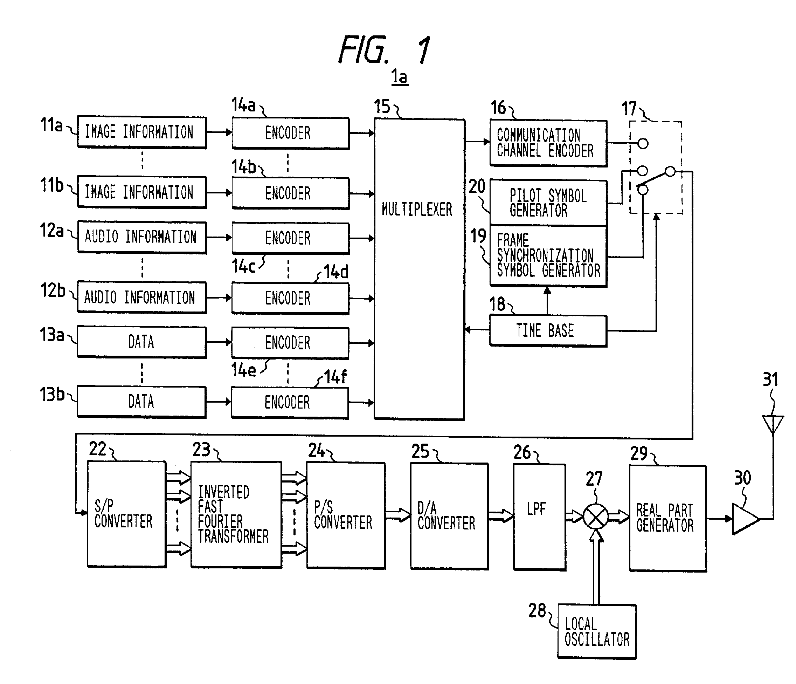

Figure 1 shows the block diagram of the digital broadcasting transmission system of this invention. The system is represented by 1a in this figure.

The said transmission system 1a of this invention comprises encoders 14a through 14f used to encode image information 11a and 11b, audio information 12a and 12b, and data 13a and 13b; a multiplexer 15 used to multiplex each of encoded digital signals; a communication channel encoder 16 used to encode the output from the multiplexer 15; a symbol data selector 17; a time base 18 used to generate the time signal used as the reference signal of the transmission system 1a; a frame synchronization symbol generator 19; a pilot symbol generator 20; an S/P converter 22; an inverse fast Fourier transformer (IFFT) 23; a P/S converter 24; a D/A converter 25; a low-pass filter (LPF) 26; a frequency converter 27; a local oscillator (L0) 28; a real part generator 29; a high-frequency amplifier 30; and an antenna 31.

Image information 11a and 11b, audio information 12a and 12b, and data 13a and 13b are encoded to digital signals in the encoders 14a through 14f. The encoded digital signals are then multiplexed in the multiplexer 15 and output to the communication-channel encoder 16. The time base 18 generates the time signal used as the reference signal of the transmission system 1a.

The symbol data selector 17 connects the frame synchronization symbol generator 19 to the S/P converter 22 at first according to the time signal from the time base 18 to transmit the frame synchronization symbol for one transmission symbol time to the S/P converter, then connects the pilot symbol generator 20 to the S/P converter 22 to transmit the pilot symbol for one transmission symbol time to the S/P converter 22. After this, the symbol data selector 17 connects the communication channel encoder 16 to the S/P converter 22 to transmit encoded communication data to the S/P converter 22.

The N complex numbers $C_k$ (k=0,..., N-1) are generated in time series in the communication channel encorder 16, the frame synchronization symbol generator 19, and the pilot symbol signal generator 20 for each symbol time. One data item for one complex number corresponds to plural bits. This N-number time series data is converted to time-ordered parallel data in the S/P converter 22.

In a transmission system that transmits signals using plural frequencies set orthogonally with each another, this N-number data items are assigned to N-number frequencies. In other words, if the k-th frequency data in a symbol is represented by a complex number $C_k$ (k=0,..., N-1), the N-number frequencies represented by $f_k=k/(NT)$ (k=0,..., N-1) will be modulated with $C_k$ respectively. Hereafter, "k" will be referred to as a frequency index. The interval of transmission frequencies becomes 1/(NT). "T" is a transmitter timing period and "$t_s=NT$" becomes one effective symbol time. The complex number signal corresponding to a transmission signal for one effective symbol time is given by the following formula (formula 1).

(Formula 1)

$$x(t) = \sum_{k=0}^{N-1} C_K \, e^{j2\pi f_k t}$$

... (Formula 1)

Actually, only the real part in the formula 1 is transmitted. Since the formula 1 can be regarded as a formula obtained by carrying out inverse Fourier transformation for $C_k$ in time series, discrete Fourier transformation is carried out for $C_k$ in the inverse fast Fourier transformer (IFFT) 23 to obtain x(t). The output signals from the inverse fast Fourier transformer (IFFT) 23 are converted to time series signals in the P/S converter 24. At this time, the signal for the guard interval of time $t_g$=N'T is prefixed to each of the converted signals as an extension of the effective symbol to form one transmission symbol. One transmission symbol time is represented as $t_g + t_s$ = (N + N')T. This signal is converted to a smooth analog signal in the D/A converter 25 and the low-path filter (LPF) 26.

The said signal is also up-converted to an RF signal in the local oscillator (LO) 28 and the frequency converter 27. And finally, only the real part of the signal is fetched in the real part generator 29, and the signal, passing through the high-frequency amplifier 30, is transmitted from the antenna 31. The up-converted complex number signal is assumed as the $f_k$ + F one instead of $f_k$ in the formula 1. "F" is the oscillation frequency from the local oscillator 28.

In this transmission system 1a that transmits signals using N-number frequencies set orthogonally with each another, plural symbols are collected in a frame. Figure 2 shows the configuration of such a frame. The frame 51 comprises a frame synchronization symbol 52, a pilot symbol 53, and data 55. The frame synchronization symbol 52 provided at the start of the frame is generated in the frame synchronization symbol generator 19. This frame synchronization symbol 52 is assumed as a nosignal symbol (NULL symbol which assumes $C_k$=0 for every k) that transmits no data here.

In the transmission system 1a in this embodiment, a pilot symbol 53 for both frequency synchronization and timing synchronization, generated in the pilot symbol generator 20, is transmitted just after this frame synchronization symbol 52. After this, data 55 is transmitted.

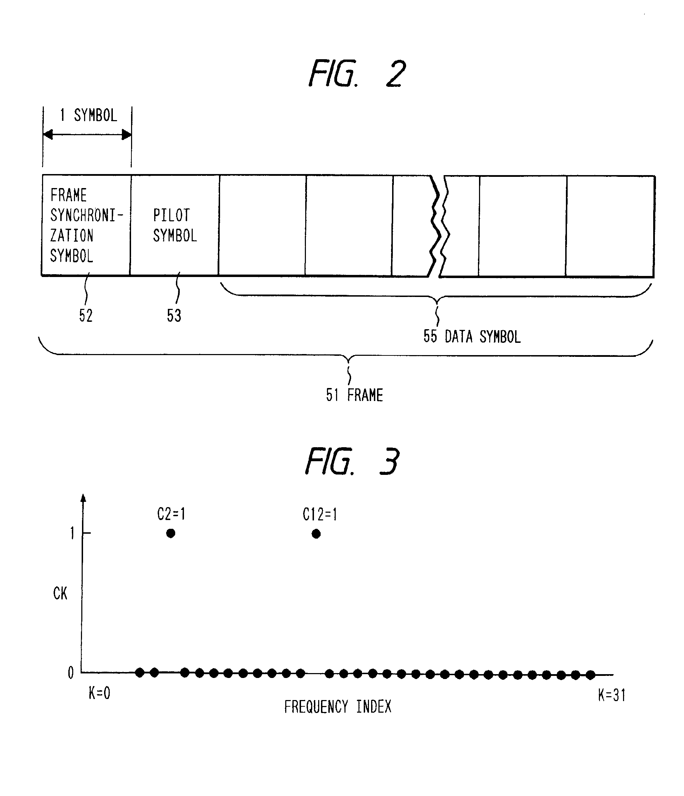

Figure 3 shows the configuration of the pilot symbol signal 53 for frequency and timing synchronizations. The pilot signal 53, as shown in Figure 3, are assigned for two signal frequencies, and an interval of four or more is secured between those two pilot symbol signals. In other words, $C_k$=0 is assumed for k=0 to 31 except for k=2 and k=12, and $C_2$=$C_{12}$=1 is assumed. In this embodiment, N=32 is assumed. When $C_k$ is modulated, the QPSK modulation system in which any of 1, -1, j1, and -j1 values is assumed is adopted.

Next, the digital broadcasting receiving system of this invention will be explained.

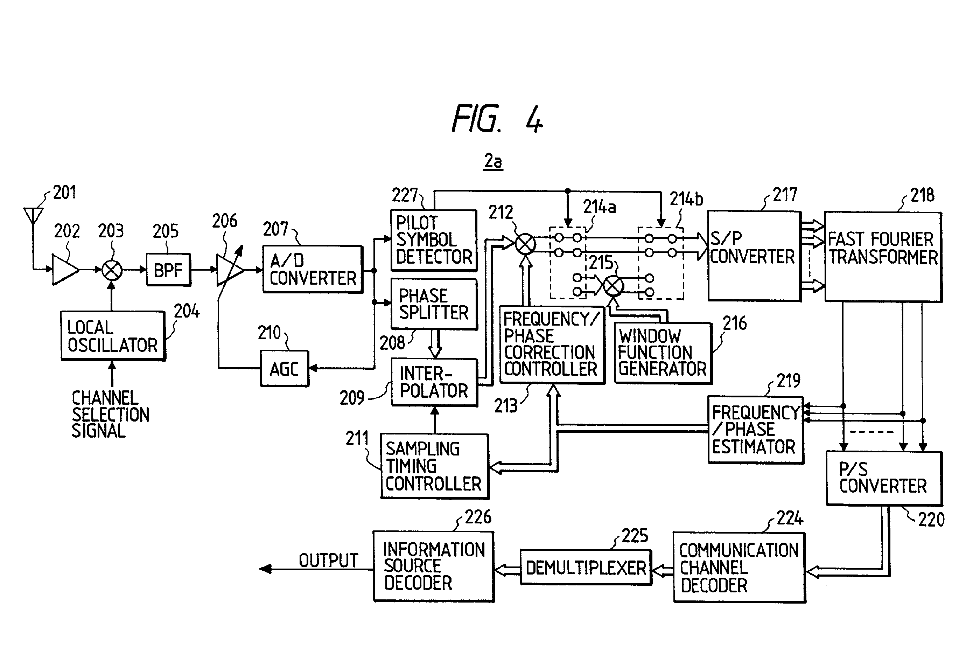

Figure 4 shows the block diagram of the receiving system 2a used to receive signals from the said transmission system 1a.

The receiving system 2a comprises an antenna 201; a high-frequency amplifier 202; a frequency converter 203; a local oscillator 204; a band-pass filter (BPF) 205; an intermediate frequency amplifier 206; an A/D converter 207; a phase splitter 208; an interpolator 209; an AGC 210; a sampling timing controller 211; a derotator 212; a frequency/phase correction controller 213; selectors 214a and 214b; a multiplier 215; a window function generator 216; an S/P converter 217; a fast Fourier transformer (FFT) 218; a frequency/phase estimator 219; a P/S converter 220; a communication channel decoder 224; a demultiplexer 225; a information decoder 226; and a pilot symbol detector 227.

The signals from the transmission system 1a are caught by the antenna 201, then amplified in the high frequency amplifier 202. After this, the signals are converted to intermediate frequency band signals in the local oscillator 204 controlled by the channel selection signal and the frequency converter 203. The neighbor jamming waves and noise of these signals are suppressed by the band-pass filter (BPF) 205 that passes only N-number frequencies transmitted from the said transmission system 1a. The signals are then amplified in the intermediate frequency amplifier 206. This intermediate frequency amplifier 206 is controlled by the AGC 210 so that the output average value from the amplifier 206 may be fixed. The output signals from the intermediate frequency amplifier 206 are sampled in the A/D converter 207. As a result, the sampling frequency is fixed as the sampling frequency, which becomes more than double the maximum frequency contained in the output signals from the intermediate frequency amplifier 206.

The phase splitter 208 generates complex number signals from the output signals from the A/D converter 207 corresponding to those output signals.

Actually, the timing of the phase splitter 208 to receive transmission signals is not fixed. It varies according to the jitter, etc. To cope with such the variability, signals sampled in a proper timing phase are output from the interpolator 209 controlled by the sampling timing controller 211.

As shown in Formula 1, for the received signals sampled in a proper timing phase, all the necessary received frequencies can be demodulated at a time through Fourier transformation.

This Fourier transformation is carried out in the fast Fourier transformer (FFT) 218. Before this Fourier transformation, however, the frequency and phase of the input signals that are subject to Fourier transformation are corrected in the frequency/phase correction controller 213 and the derotator 212 to assure the performance of the required Fourier transformation.

The output signals from the derotator 212 are entered to the S/P converter 217. If the pilot symbol detector 227 detects a no-signal period of time (NULL symbol) for more than a certain time at this time, however, it is regarded as a frame synchronization symbol 52, and the pilot symbol 53 following the frame synchronization symbol 52 is multiplied by a window function generated in the window function generator 216 in the multiplier 215. Then, the symbol is entered to the S/P converter 217. In this embodiment, this window function is given as the Hanning function $b_n = 1-\cos(2\pi n/N)(n=0, 1, ..., N-1)$. The selection switches 214a and 214b controlled by the pilot symbol detector 227 are used for this function switching.

Fourier transformation is carried out for the output signals from the S/P converter 217 in the fast Fourier transformer 218.

The Fourier-transformed output signal corresponding to the pilot symbol 53 is entered to the frequency/phase estimator 219 to estimate the frequency and phase of the received pilot signals shown in Figure 3, which is transmitted as a pilot symbol 53.

The estimation result from the pilot signal frequency/phase estimator 219 is used as a signal for the controlling carried out in the frequency/phase correction controller 213 and the sampling timing controller 211.

On the other hand, the selection switches 214a and 214b connect the derotator 212 to the S/P converter 217 directly for symbols other than the pilot symbol 53. Of the output signals from the S/P converter 217, signals for only one effective symbol are Fourier-transformed in the fast Fourier transformer 218. The output signals from the fast Fourier transformer 218 are converted to serial time series signals in the P/S converter 220. One data symbol in this embodiment is assumed as an N=32 data series. This data series is sent to the communication channel decoder 224.

The signals sent to the communication channel multiplexer 224 are restored to original image and audio information, or data in the demultiplexer 225 and the information decoder 226.

This completes the explanation for the receiving system configuration in the first embodiment of this invention.

Next, some more operations of the transmission and receiving systems of this invention for the timing and frequency synchronizations will be explained.

The transmission system 1a, as explained above, delimits the image information 11a and 11b, audio information 12a and 12b, and data 13a and 13b in frames 51 for transmission. A frame synchronization symbol 52 and a pilot symbol 53 are transmitted before actual data 55 is transmitted using a frame.

Such the frame is used as the unit for the transmission to be carried out in the transmission system 1a. The receiving system can detect a no-signal period of time for one effective symbol time or over, that is, a frame synchronization symbol 52 only by monitoring the signal output for the transmission frequency band more than one frame time duration.

The receiving system can use the pilot symbol 53 as a frame synchronization symbol if the number of frequencies to be transmitted with the pilot symbol 53 is less than the number of frequencies used to transmit data 55, and a difference is recognized between the transmission power of the pilot symbol 53 and the average power of data 55 even when no frame synchronization symbol 52 is provided in the frame 51.

Then, the pilot symbol 53 is transmitted/received just after the frame synchronization symbol 52. In this embodiment, the pilot signal is transmitted for one transmission symbol time using the k=2 and k=12 frequencies $f_2$ and $f_{12}$ with $C_2=C_{12}=1$.

The complex number signal up-converted in the local oscillator 28 and the frequency converter 27 in which the oscillation frequency, for example, is assumed as F=1.5 GHz is given in the formula 1 in which $f_k$ is assumed as $f_k + F$. In other words, the complex number signal containing up-converted N-number frequencies is generally given in the following formula 2.

$$x(t) = \sum_{k=0}^{N-1} C_K \, e^{j2\pi(f_k+F)t}$$
$$= \sum_{k=0}^{N-1} C_K \, e^{j2\pi(\frac{k}{NT}+F)t}$$

$$\dots \quad (\text{Formula } 2)$$

If the subject symbol is a pilot symbol 53, a frequency is not sent for every k in the formula 2. For example, as explained above, a pilot signal exists only in the $k_1=2$ and $k_2=12$ frequencies.

T is the basic timing period in the said transmission system. The reference time t=0 is defined as the time to start the effective symbol of the pilot symbol 53. The section between t=0 to $t_s=NT$ corresponds to the effective symbol time. The section between t = $-t_g$ = -N'T and 0 corresponds to the guard interval time. The signals represented in the formula 2 are also transmitted within this time.

In the receiving system 2a, the received signals are down-converted in the local oscillator 204 and the frequency converter 203. In this embodiment, the frequency of the oscillation signal from the local oscillator 204 is assumed as F' and its initial phase is assumed as $\Theta$. The complex number signal corresponding to the output signal from the frequency converter 203 is given in Formula 3.

$$y(t) = \sum_{k=0}^{N-1} C_K \, e^{j2\pi(\frac{k}{NT}+F)t} \, e^{-j2\pi F't-\Theta}$$
$$= e^{-j\Theta} \sum_{k=0}^{N-1} C_K \, e^{j2\pi(\frac{k}{NT}+F-F')t}$$

$$(\text{Formula } 3)$$

The real signals sampled in the A/D converter 207 are entered to the phase splitter 208, then the complex number signals corresponding to the real signals are output from the phase splitter 208. The timing phase of the output signals from the interpolator 209 is controlled by the timing signal decided in the sampling timing controller 211. In this embodiment, this sampling timing is assumed at t = nT' + $\tau$ = n(1+$\delta$)T + $\tau$(n=0,1,...) as the initial value assumed before the synchronization is acquired. In other words, the timing cycle in the said receiving system is (1 + $\delta$) times that of the transmission system. The sampling phase at n=0 is delayed by $\tau$ from t=0 of the said transmission system.

If neither the timing synchronization nor the frequency synchronization is acquired in the receiving system 2a, the derotator 212 and the frequency/phase correction controller 213 are disabled for correction. The output signal from the interpolator 209 is output from the derotator 212 as is. This complex number signal series $y_n$ is given in the next Formula 4.

$$y_n = y(nT' + \tau)$$

$$= e^{-j\Theta} \sum_{k=0}^{N-1} C_K \, e^{j2\pi(\frac{k}{NT} + F - F')(nT' + \tau)}$$

$$= e^{j(2\pi\Delta F\tau - \Theta)} \sum_{k=0}^{N-1} e^{j2\pi\frac{k\tau}{NT}} C_k$$

$$\times e^{j\frac{2\pi}{N}(k + \Delta FNT)(1+\delta)n}$$

(Formula 4)

In the above formula, $\Delta F$ is F-F'. If the signal in Formula 4 is assumed as the signal of discrete time n and Fourier transformation is carried out for the signal, then the frequency $k = k_1$ becomes as shown below.

$$k_1' = (k_1 + NT\Delta F)(1 + \delta) \qquad\qquad \text{(Formula 5a)}$$

And, $k_2$ becomes as shown below.

$$k_2' = (k_2 + NT\Delta F)(1 + \delta) \qquad\qquad \text{(Formula 5b)}$$

The observation was then made on the above conditions, and it was found out that the amplified complex number would also be changed by the value shown in the following formula respectively.

$$\exp(-j\,\Theta + j2\pi\Delta F\tau + j2\pi k_1/(NT)), \qquad\qquad \text{(Formula 6a)}$$

$$\exp(-j\,\Theta + j2\pi\Delta F\tau + j2\pi k_2\tau/(NT)), \qquad\qquad \text{(Formula 6b)}$$

$1 + \delta$ is represented as follows according to the result of Formula 5a and Formula 5b.

$$1 + \delta = (k2' - k1')/(k2 - k1) \qquad\qquad \text{(Formula 7)}$$

The offset $\Delta F$ between frequencies is given as follows in the next formula.

$$\Delta F = (k_2 k_1' - k_1 k_2')/\{NT(k_2' - k_1')\}$$

$$= (k_2 k_1' - k_1 k_2')/(NT'(k_2 - k_1)\} \qquad\qquad \text{(Formula 8)}$$

If the subject phases in the frequencies $k_1'$ and $k_2'$ are assumed as $\phi_1$ and $\phi_2$ in (Formula 4), then $\phi_1$ and $\phi_2$ will be as shown below.

$$\phi 1 = -\Theta + 2\pi(\Delta F + k_1/(NT))\tau + \arg C_{k1} \qquad\qquad \text{(Formula 9a)}$$

$$\phi 2 = - \Theta + 2\pi(\Delta F + k_1/(NT))\tau + \arg C_{k2} \qquad \text{(Formula 9b)}$$

$\arg C_{k1}$ and $\arg C_{k2}$ represent $C_{k1}$ and $C_{k2}$ phase angles. (In this embodiment, both phase angles are 0.) $\tau$ and $\Theta$ can be found from Formula 9a and Formula 9b as shown below.

$$\tau = (\phi_2 - \phi_1 - \arg C_{k2} + \arg C_{k1})NT/$$

$$\{2\pi(k_2 - k_1)\} + qNT/(k_2 - k_1) \qquad \text{(Formula 10)}$$

$$\Theta = -\phi_1 + k_1'(\phi_2 - \phi_1 - (arg\ C_{k2} - arg\ C_{k1} + 2\pi q)\ /\ (k_2' - k_1') + 2\pi q$$
$$= -\phi_1 + (\Delta F + \frac{k1}{NT})\ \frac{NT}{k_2 - k_1}\ (\phi_2 - \phi_1 - (arg\ C_{k2} - arg\ C_{k1}) + 2\pi q) + 2\pi q$$

$$\text{(Formula 11)}$$

In Formula 11, q is an integer indicating a given uncertainty value according to the integer multiple of $2\pi$ existing in both $\phi_1$ and $\phi_2$. If the range of the $\tau$ existence is limited, however, this q can be decided uniquely.

For example, since N=32 and $k_2 - k_1 = 10$ are satisfied in this embodiment, $\tau_0 + 3.2qT$ can also be judged correct for an arbitrary integer q if $\tau = \tau_0$ is a correct answer of Formula 10. If $\tau$ is assumed to exist in $-1.6T < \tau \leq 1.6T$, q that satisfies it, as well as $\tau$, can be decided uniquely. And, as shown clearly in Formula 10, the range that can decide this $\tau$ uniquely is in inverse proportion to $|k_2 - k_1|$, so $|k_2 - k_1|$ is selected corresponding to the timing uncertainty to be expected in the object system. In general, the range that can catch the initial timing is $NT/|k_2 - k_1|$. Thus, if the maximum value of the uncertainty to catch the timing at t=0 to be expected is $\tau'$,

$$|\tau'| \leq NT/(2|k_2 - k_1|) \qquad \text{(Formula 12a)}$$

it is only needed to decide k2 and k1 so that the above condition Formula 12a may be satisfied. The Formula 12a is also equivalent to the formula shown below.

$$1/|\tau'| \geq 2|f_2 - f_1| \qquad \text{(Formula 12b)}$$

To find frequencies $k_1'$ and $k_2'$, as well as phase angles $\phi_1$ and $\phi_2$ precisely in the said receiving system, signals to be Fourier-transformed can be multiplied by a window function such as the Hanning function except for rectangle ones. This operation is done in the window function generator 216 and the window function multiplier 215. The switches 214a and 214b controlled by the pilot symbol detector 227 are used to decide whether to multiply the object signal by a window function.

The method to decide frequencies, etc. when a window function is multiplied is described, for example, in the Institute of Electronics, Information and Communication Engineer Transactions; Vol. J70-A, No.5 (May, 1987), pages 503 to 798. According to this method, it is no need to carry out a Fourier transformation for every frequency to decide a frequency.

For example, if the maximum value $\Delta F_m$ of the frequency shift $\Delta F$ including the uncertainty of the Doppler shift and the local oscillator is $-1/(2NT) < \Delta F_m \leq 1/(2NT)$, the Fourier transformation result is needed only for the transmission frequency $f_k$ and one more frequency above/under the $f_k$. In general, if the maximum value $\Delta F_m$ is $-1/(2NT) - h/(NT) < \Delta F_m \leq 1/(2NT) + h/(NT)$, the Fourier transformation result is needed only for the transmission frequency $f_k$ and $2(h + 1)$ frequencies above/under the $f_k$. In this embodiment, the FFT 218 outputs the Fourier transformation result used to acquire timing and frequency synchronizations only to the frequency indexes $k_1$ and $k_2$, and $2(h + 1)$ frequencies above/under each of $k_1$ and $k_2$, assuming the expected maximum frequency as $\pm|1/(2NT) + h/(NT)|$.

The object frequency can be estimated easily if it is multiplied by a window function. In this case, however, the frequency spectrum is spread widely. When receiving two or more frequencies, therefore, the frequency interval must be set so that those frequencies may not be set too closely. No problem will arise from the frequency interval if there is a frequency interval of 4 or more Fourier transformation output pitch frequencies. In the transmission system 1a of this embodiment, the interval between two frequencies $k_1$=2 and $k_2$=12 is set to 10 of the transmission frequency pitch which is over 4. So, if the frequency pitch of the Fourier transformation to be carried out on the receiver side is set to 10/4 of the transmission frequency pitch or less, the condition will be satisfied.

Fourier transformation is executed in the fast Fourier transformer 218. The frequencies $k_1'$ and $k_2'$, as well as the phase angles $\phi_1$ and $\phi_2$ are estimated in the frequency/phase estimator 219.

As explained above, the $\delta$, $\tau$ and $\Delta F$, $\Theta$ can be estimated from those values. Those shift values are estimated in the sampling timing controller 211 and the frequency/phase correction controller 213. $\delta$, $\tau$ and $\Delta F$, $\Theta$ can be estimated such way by transmitting the pilot signal using two or more frequencies.

Furthermore, such the estimation is also possible when three or more frequencies are used to transmit the pilot signal. In this case, plural sets of estimation can be obtained for $\delta$, $\tau$ and $\Delta F$, $\Theta$ by assuming the combination of two frequencies selected from those three frequencies or more as $k_1$ and $k_2$ sequentially. Then, the average value is obtained from part or whole of those sets of estimation to assume the required estimation values $\delta$, $\tau$ and $\Delta F$, $\Theta$. This averaging operation is also executed in the sampling timing controller 211 and the frequency/phase correction controller 213.

When receiving data following the pilot symbol 53, the sampling timing controller 211 corrects the shift $\tau$ of the initial sampling phase to renew the sampling timing period T' to T'/(1 + $\delta$), so that the timing synchronization can be acquired. The frequency/phase correction controller 213 can correct the frequency offset $\Delta F$ and the initial phase shift $\Theta$, as well as it can allow the receiving system 2a to acquire the frequency synchronization with the transmission system 1a by controlling the derotator 212.

If the selector 214 is set to the window function multiplier 215 for receiving the pilot symbol 53, the selector is set to the noprocessing side for receiving data 55.

When the timing and frequency are synchronized, the Formula 3 of the received signal matches with the Formula 1 of the transmit signal. And, when this received signal is Fourier transformed, transmit data $C_k$ can be reproduced collectively.

(Sampling of pilot symbols)

Next, the embodiment of this invention will be explained in relation to the pilot symbol sampling points.

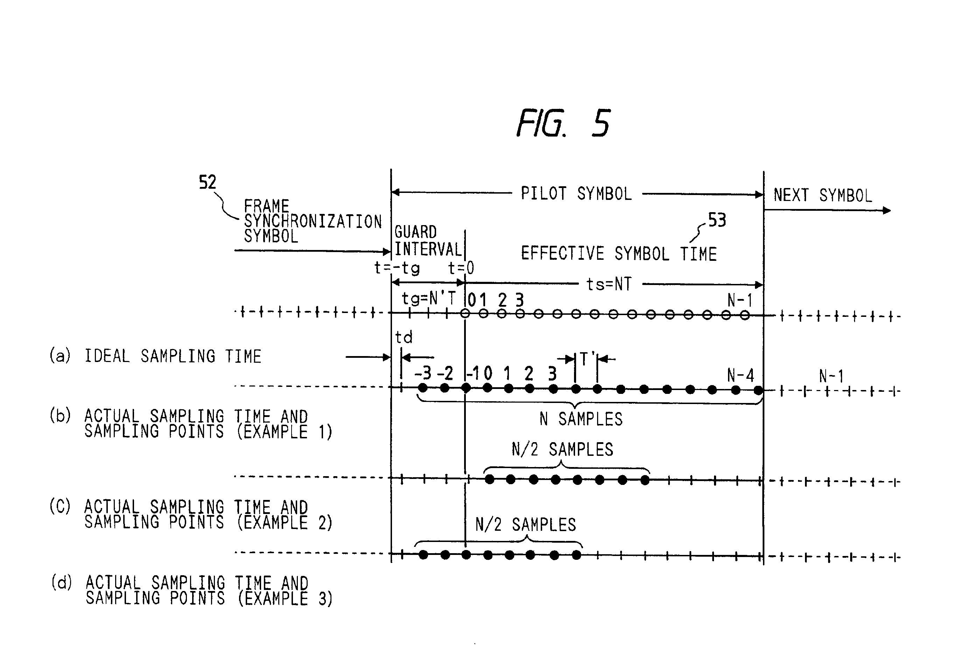

Figure 5 (a) shows an ideal sampling time mainly for the pilot symbol 53. The time t=0 indicates the time to start the effective symbol in the pilot symbol 53.

When the timing is not synchronized in both transmission and receiving systems, the sampling interval T' in the receiving system 2a differs from T in the transmission system 1a. Furthermore, the time on which the pilot symbol detector 227 detects the pilot symbol 53 is shifted by $t_d$ from the ideal time in some cases. When the difference between T' and T, as well as the shift $t_d$ are small, N-number samples from n=0 to N-1 can be used as are to estimate frequencies and phases.

On the other hand, when the shift $t_d$ is large or when the sampling interval T' is a little larger than T, the last sample or two or more samples at the sampling points within n=0 to N-1 come in the area of the data symbol 55, which is the next to the pilot symbol 53. This may cause errors in frequency and phase estimation.

Figure 5 (b) shows the sampling method for the pilot symbol 53 to avoid such the estimation error. In other words, sampling is not started within the effective symbol, but started at a time within the pilot symbol guard interval. In the example shown in Figure 5 (b), N-number samples within n=-3 to n=N-4 are sampled. Frequency and phase estimation can be made with no problem if the time lag at this sampling point is taken into consideration.

Figure 5 (c) shows another sampling method for the pilot symbol 53. In this case, sampling is started at a time within the effective symbol at the sampling interval T', but the number of sampling points is a little less than N. With this, sampling of the symbol next to the pilot one can be avoided. In the example shown in Figure 5 (c), N is assumed to be an even number and sampling is made at N/2 sampling points. In this case, when the N/2 samplings are ended, Fourier transformation can be made in the fast Fourier transformer 218. Thus, the timing synchronization can be acquired earlier. When signals are multiplied by a window function, the window function is selected according to the number of samples.

Furthermore, in case of the method shown in Figure 5 (c), the number of sampling points must be set enough to estimate the frequencies and phases transmitted as the pilot symbol 53. Concretely, the number of sampling points is N/2 and the sampling interval remains the same in this embodiment, so the Fourier transformation output frequency interval becomes double that assumed when the number of sampling points is N. As shown in Figure 3, however, since the pilot signal frequency interval is 10, the frequency interval after the Fourier transformation carried out when the number of sampling points is N/2 is 5, which is over the interval of 4 or over for assuring the required accurate estimation.

The methods shown in Figures 5 (b) and (c) can also be combined as shown in Figure 5 (d).

As shown in the first embodiment, if a null symbol 52 is transmitted before the pilot symbol 53, the signals at the guard interval of the pilot symbol 53 are not affected by the delay of the previous symbol. When the conception shown in Figure 5 (d) is extended, therefore, the synchronization of both timing and frequency can also be assumed only by sampling signals within the time around the guard interval of the pilot symbol 53. In general, the synchronization is acquired as follows.

Assume now that a pilot signal frequency is to be separated from the other one by a width of M transmission frequencies, that is, by M/NT [Hz] in the transmission system. On the other hand, assume that Fourier transformation is made for N/L samples at the same sampling time interval, that is, at the sampling time of $t_s$/L for the synchronization in the receiving system. Then, the frequency pitch of this Fourier transformation becomes L times that of the Fourier transformation carried out according to the sampling at N points. The result of the Fourier transformation carried out according to the sampling at N/L points of the pilot signal separated initially by a width of M frequencies becomes a separation of M/L frequencies in width.

It is only needed to select the frequency interval and sampling time $t_s$/L of the pilot signal so that the separation may become 4 or over. In other words, M/L $\geq$ 4 may be satisfied.

For example, to acquire the synchronization within the guard interval, which is 1/4 of one effective symbol time, the L value must be 4 or over. To realize this, the M value must be 16 or over. This value is independent of the N value.

(Second embodiment)

Next, the second embodiment of this invention will be explained. In this embodiment, the digital broadcasting transmission system that uses the OFDM method is the same as the transmission system 1a shown in Figure 1. The receiving system takes a different configuration, however. In the second embodiment for the receiving system, the synchronization is controlled more in detail while data symbols except for the frame synchronization symbol 52 and the pilot symbol 53 are received.

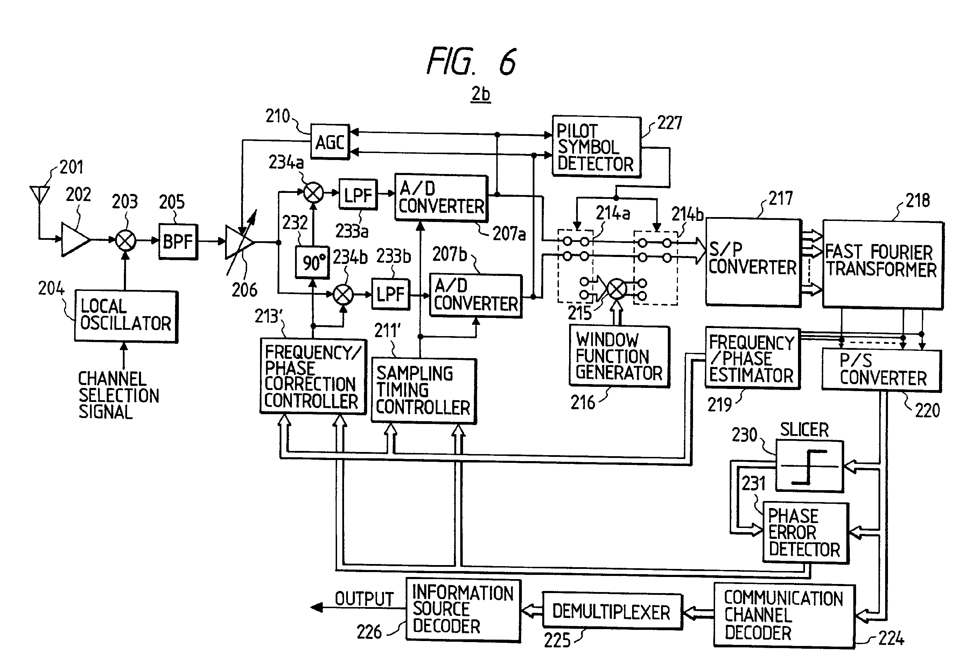

Figure 6 shows the block diagram of the receiving system for digital broadcasting of this invention.

This receiving system 2b differs from the receiving system 2a shown in Figure 4 in that this receiving system 2b is provided with a slicer (hard judge) 230, a phase error detector 231, a 90° phase shifter 232, low-pass filters 233a and 233b, and frequency converters 234a and 234b.

Just like in the receiving system 2a shown in Figure 4, signals transmitted from the transmission system 1a are caught by the antenna 201, then amplified in the high-frequency amplifier 202 and converted to intermediate frequency band signals in the local oscillator 204 controlled by the channel selection signal and in the frequency converter 203. The adjacent hamming waves and noise of these signals are suppressed in the band-pass filter (BPF) 205 that passes only N-number frequencies from the said transmission system 1a. These signals are then amplified in the intermediate frequency amplifier 206. The output from this intermediate frequency amplifier 206 is divided into two systems; one system comprising a frequency/phase correction controller 213'; a 90° phase shifter 232; a frequency converter 234a; and a low-pass filter (LPF) 233a, and the other system comprising a frequency/phase correction controller 213'; a frequency converter 234b; a low-pass filter 233b. Those signals are converted to the required complex number base band signals respectively there. The outputs from the low-pass filters 233a and 233b are sampled in the A/D converters 207a and 207b controlled by the sampling timing controller 211'.

The outputs from the A/D converters 207s and 207b control the AGC 210, and they are entered to the pilot symbol detector 227. If this pilot symbol detector 227 detects the start point of the pilot symbol 53 in a transmitted frame, the selectors 214a and 214b connect the output signals from the A/D converters 207a and 207b to the window function multiplier 215. As a result, the output signals from the A/D converters 207a and 207b are multiplied by the window function from the window function generator 216. After this, the selectors 214a and 214b are connected according to the signal from the pilot symbol detector 227 so that the output signals from the A/D converters 207a and 207b are connected to the next device directly Without being multiplied by any window function for signals other than the pilot symbol.

The output signal from the selector 214b, just like in the receiving system 2a shown in the first embodiment, passes the S/P converter 217, then it is Fourier-transformed in the fast Fourier transformer (FFT) 218.

If the pilot symbol 53 is Fourier-transformed, the output from the fast Fourier transformer 218 is transmitted to the frequency/phase estimator 219. The frequency and phase of the pilot symbol are estimated here. The estimation result is passed to both the frequency/phase correction controller 213' and the sampling timing controller 211'. This receiving system 2b uses the estimation result to acquire the synchronization of frequency and timing for transmit signals. This operation principle is as shown in the first embodiment.

In the first embodiment, the A/D converter 207 operates with a fixed sampling frequency and receives signals in the necessary timing phase from the interpolator 209. On the other hand, the receiving system 2b in the second embodiment controls the sampling time in the A/D converters 207a and 207b directly.

In the first embodiment, frequencies and phases are corrected in the frequency/phase correction controller 213 according to the discrete time signal. On the other hand, in the second embodiment, frequencies and phases are corrected in the frequency/phase correction controller 213' before they are converted from analog signals to digital signals.

In the second embodiment, a slicer 230 and a phase error detector 231 are provided, as shown in Figure 6, to control synchronization more in detail while symbols other than the frame synchronization symbol 52 and the pilot symbol 53 are received.

The slicer 230 makes a hard-judgment for the output from the P/S converter 220 to select the most geometrical values from the complex numbers $C_k$ that might be received. The selected complex numbers are $C_k$=1, -1, j, and -j in case of the transmission system shown in Figure 1.

Assume now that synchronization is almost established using the pilot symbol 53 and the $\Theta$, $\Delta F$, $\tau$, and $\delta$ are very small values. At this time, the demodulation signal $C_{k1}$ to the data $C_{k1}$ whose frequency index of a symbol is k1 (that is, the output corresponding to Fourier-transformed frequency $k_1$) is given as shown in Formula 13.

$$C_{k1}' = \frac{1}{N} e^{j(-\Theta + 2\pi\Delta F\tau) + j2\pi\frac{k_1\tau}{NT}} C_{k1}$$
$$\times \frac{\sin\frac{(N-1)\pi}{N}(k_1\delta + \Delta FNT(1+\delta))}{\sin(k_1\delta + \Delta FNT(1+\delta))}$$
$$\times e^{j\frac{(N-1)\pi}{N}(k_1\delta + \Delta FNT(1+\delta))}$$

(Formula 13)

Thus, the phase difference $\theta_1$ to be applied to $C_{k1}$. becomes as shown below when $C_{k1}$ is assumed as the reference.

$$\theta_1 = -\Theta + 2\pi(\Delta F\tau + k_1\tau/(NT))$$
$$+ (N-1)\pi\{k_1\delta + \Delta FNT(1+\delta)\}/N \qquad \text{(Formula 14a)}$$

In the same way, the phase difference $\theta_2$ to be applied to $k_2$ becomes as shown below.

$$\theta_2 = -\Theta + 2\pi(\Delta F\tau + k_2\tau/(NT))$$
$$+ (N-1)\pi\{k_2\delta + \Delta FNT(1+\delta)\}/N \qquad \text{(Formula 14b)}$$

The difference between both $\theta_2 - \theta_1$ can be found as follows.

$$\theta = \theta_2 - \theta_1$$
$$= 2\pi\{\tau/(NT) + (N-1)\delta/(2N)\}(k_2 - k_1)$$

(Formula 15)

As shown in Formula 15 clearly, the difference of the phase errors between the received demodulated signal and the hard-judged signal $\Delta\theta = \theta_2 - \theta_1$ includes only the sample timing errors and $\tau$. If the sampling timing is controlled

so that this $\Delta\theta$ may become 0 using PLL, etc., then the timing can be controlled precisely.

In the receiving system 2b shown in Figure 6, the slicer 230 judges $C_k$ when receiving symbols other than the frame synchronization symbol and the pilot symbol, and the phase error detector 231 finds the said $\theta_1$, $\theta_2$ for proper $k_1$ and $k_2$. Furthermore, the sampling timing controller 211' uses these $\theta_1$, $\theta_2$ to find the $\Delta\theta$ to control the timing.

In general, the number of transmission frequencies N is a few tens or more. The said $\Delta\theta$ can also be found for many kinds of $k_1$ and $k_2$ combinations. In this case, the average value is found from part or all the $\Delta\theta$ values to assume it as the required $\Delta\theta$.

On the other hand, from Formula 14a and Formula 15, the following can be obtained approximately.

$$\theta_1 - k_1\Delta\theta/(k_2 - k_1) = -\Theta + (N - 1)\,\pi\Delta FT \qquad \text{(Formula 16)}$$

As shown in Formula 16 clearly, $\theta_1 - k_1\Delta\theta/(k_2 - k_1)$ includes only frequency/phase correction control parameters $\Theta$ and $\Delta F$. Thus, the control can be made precisely by controlling the frequency/phase correction so that this $\theta_1 - k_1\Delta\theta/(k_2 - k_1)$ may become 0.

In the receiving system 2b of this invention shown in Figure 6, just like the timing control, $\theta_1 - k_1\Delta\theta/(k_2 - k_1)$ is calculated in the frequency/phase correction controller 213' from the found $\theta_1$, $\theta_2$ for carrier recovery.

The demodulated symbols of data 55 output from the P/S converter 220 are entered to the communication channel decoder 224, then restored to original image information, audio information, or data in the demultiplexer 225 and the information decoder 226. This completes the explanation for the configuration and operation of the receiving system of this invention.

Example 1:

A digital broadcasting system comprising a transmission system and a receiving system; said transmission system transmits signals by the OFDM, which is a modulation method using plural frequencies set orthogonally to each other with frequency intervals of 1/(NT), and in which at least one transmission symbol time comprises one guard interval and one effective symbol time following said guard interval, and transmits a pilot signal comprising two or more frequencies at fixed time intervals, and said receiving system receives signals from said transmission system, wherein said receiving system comprises at least a means to estimate the timing period offset, timing phase offset, frequency offset, phase offset, or some or all of them in itself by estimating the frequency and phase of the pilot signal using the output or said received pilot signal Fourier transformation; a means to control the sampling timing or a means to control the frequence/phase correction, or both of those means to establish the timing or frequency synchronization, or both synchronizations using said estimated values.

Example 2:

The digital broadcasting system defined in example 1, wherein said receiving system estimates, among said timing period offset $\delta$, with $\delta = (k_2' - k_1') / (k_2 - k_1) - 1$ and said frequency offset $\Delta F$ with $\Delta F = (k_2 k_1' - k_1 k_2') / [NT (k_2' - k_1')]$. In the above formulas $k_1$ and $k_2$ are the transmission frequencies of said pilot signal, and $k_1'$ and $k_2'$ are the estimated frequencies of said pilot signal in said receiving system.

Example 3:

The digital broadcasting system according to example 1, wherein said receiving system estimates said timing phase offset $\tau$ with

$$\tau = \frac{NT}{2\pi(k_2 - k_1)}\{\Phi_2 - \Phi_1 - (\arg C_{k2} - \arg C_{k1}) + 2\pi q)\}$$

and said phase offset $\Theta$ with

$$\Theta = -\Phi_1 + \frac{k_1'}{k_2' - k_1'}(\Phi_2 - \Phi_1 - \arg C_{k1} + \arg C_{k2} + 2\pi q) + 2\pi q$$

In the above formulas, $k_1$ and $k_2$ are the transmission frequencies of said pilot signal, and $\text{arg}C_{k1}$, $\text{arg}C_{k2}$ are the phase angles of the pilot signal transmission symbols $C_{k1}$ and $C_{k2}$. $k_1'$ and $k_2'$ are the estimated frequencies of said pilot signal in said receiving system, and $\Phi_1$ and $\Phi_2$ are the estimated phase angles. q is an integer.

Example 4:

The digital broadcasting system according to example 2 or 3, wherein said receiving system finds plural offset values of each of $\delta$, $\Delta F$, $\tau$ and $\Theta$ by combining possible transmission frequencies of said pilot signal as k1 and $_{k2}$ and finds the average value from some or all those offset values to assume the required timing period shift, frequency shift, timing phase shift, and phase shift, when said pilot signal from the transmission system comprises three or more frequencies and some or all the offset values $\delta$, $\Delta F$, $\tau$ and $\Theta$ defined in example 2 or 3 are estimated.

Example 5:

The digital broadcasting system defined in example1, wherein said transmission system, when transmitting the pilot signal, uses at least two or more frequencies including said two or more pilot signal frequencies selected from the plural transmission frequencies, and there is a frequency interval between frequency nearest to the pilot signal and the pilot signal itself and it is M times or over that of the transmission frequencies other than the pilot signal one, it does not use the transmission frequencies included intermediate notification he interval while transmitting the pilot signal, and the time of the received signal sampling for the Fourier transformation carried out to acquire the timing or frequency synchronization, or both synchronizations is about 1/L times one effective symbol time, and the relationship between L and M satisfies the condition $M/L \geq 4$.

Example 6:

The digital broadcasting system defined in example 1 or 5, wherein said receiving system has at least a means to carry out Fourier transformation for received signals by multiplying them by a window function such as a Hanning function except for proper rectangle ones to estimate the timing period offset, timing phase offset, frequency offset, phase offset, or, some or all of these offsets.

Example 7:

The digital broadcasting system defined in example 1, wherein $f_k$ exists as the pilot signal frequency transmitted from said transmission system, and when the maximum frequency shift $\Delta F_m$ to be expected in said receiving system is represented as $|\Delta F_m| \leq (1 + 2h) / (2NT)$ using a positive integer h and the interval $1/(NT)$ of the frequencies transmitted from the transmission system, the Fourier transformation is carried out only for the frequencies within $f_k - (h + 1) / (NT)$ to $f_k + (h + 1) / (NT)$, which is the neighborhood of said pilot signal frequency to acquire the timing or frequency synchronization, or both synchronizations.

Example 8:

The digital broadcasting system defined in example 1, wherein when the maximum absolute value of the timing phase offset to be expected in said receiving system is $|\tau'|$, $f_1$ and $f_2$ exist as the frequencies used for said pilot signal in said transmission system and the $f_1$ and $f_2$ satisfy the condition of $1/|\tau'| \geq 2 | f_2 - f_1|$.

Example 9:

A digital broadcasting transmission system that transmits signals using a modulation OFDM that uses plural frequencies set orthogonally to each other and transmitted at intervals of 1/NT, and transmits a pilot signal comprising two or more frequencies selected from said plural transmission frequencies at fixed intervals, wherein if some transmission frequencies exist in the transmission frequencies in the neighborhood of said pilot signal frequencies while said pilot signal is transmitted, then there is a frequency interval of four times or over the frequency interval of 1 / (NT) used for transmission signals except for the pilot signal between the transmission signal in the frequencies nearest to said pilot signal and the pilot signal itself, and the transmission frequencies existing in this frequency interval are not used for transmission while said pilot signal is transmitted.

Example 10:

A receiving system used for digital broadcasting, which transmits signals by the OFDM method, which uses plural frequencies set orthogonally to each another with frequency intervals of 1/NT, and in which one transmission symbol time comprises one guard interval and one effective symbol time that follows said one guard interval, wherein said receiving system is provided with at least a means to estimate the timing period offset, timing phase offset, frequency offset, phase offset, or, some or all these offsets to occur in itself using the received signal Fourier transformation output; a frequence/phase correction controlling means or sampling timing period/phase controlling means, or both means to acquire the timing or frequency synchronization, or both synchronizations using said estimated values.

Example 11:

The receiving system used for digital broadcasting defined in example 10, comprising at least a means to carry out Fourier transformation by multiplying received signals by a window function such as a Hanning function except for proper rectangle ones to estimate the timing period offset, timing phase offset, frequency offset, phase offset, or some or all of these offsets to occur in itself.

Example 12:

The receiving system used for digital broadcasting defined in example 10 or 11, comprising a means to acquire the timing or frequency synchronization, or both synchronizations using a phase difference between the hard-judgment result from the received signal Fourier transformation output and said received signals.

Example 13:

The receiving system used for digital broadcasting defined in example 12, comprising a means to control the period and phase of the sampling timing so that the difference of proper two phase differences selected from plural phase differences found from between the hard-judgment result from the output of the Fourier transformation for received signals existing in at least two or more frequencies, and the received signal before the hard-judgment may be assumed as 0, or so that the value to be found by averaging some or all of the differences of the possible two phase differences selected from said plural phase differences may be assumed as 0.

Example 14:

The receiving system used for digital broadcasting defined in example 12, having a means to control the frequency/phase correction so that $\theta_1 - k_1 (\theta_m - \theta_1) / (k_m - k_1)$ may be acquired as 0 for proper 1 and m values after the phase differences $\theta_1$, $\theta_2$ are found from between the hard-judgment result from the Fourier transformation for received signals existing in at least two frequencies defined as $k_1$, $k_2$,..., and the received signals before the hard-judgment, or so that the value to be found by averaging some or all of $\theta_1 - k_1 (\theta_m - \theta_1) / (k_m - k_1)$ values may be acquired as 0.

Example 15:

The receiving system used for digital broadcasting defined in examples 10 through 14, which carries out Fourier transformation satisfying that the interval of the frequencies in the Fourier transformation result may become 1/4 or under the interval of the frequencies transmitted from said transmission system to transmit signals when the Fourier transformation of received signals carried out to acquire the timing or frequency synchronization, or both synchronizations.

Example 16:

The receiving system used for digital broadcasting defined in examples 10 through 15, wherein sampling of received signals is started at a time within the guard interval of the received signals for the Fourier transformation to be carried out to acquire the timing of frequency synchronization, or both synchronizations.

Example 17:

The receiving system used for digital broadcasting defined in examples 10 through 16, wherein when the transmission system uses two or more frequencies selected from the plural transmission frequencies to transmit the pilot signal at fixed time intervals, and when there is a transmission frequency interval of M times or over (M $\geq$1) that of the transmission signal frequencies other than the pilot signal between the signal of the frequency nearest to the pilot signal and the pilot signal itself, and when the transmission frequencies existing in the frequency interval are not used while the pilot signal is transmitted, the received signal sampling time for Fourier transformation to be carried out to acquire the timing or frequency synchronization, or both synchronizations in the receiving system is 1/L times one effective symbol time and the relationship between L and M satisfies the condition of M/L $\geq$4.

Example 18:

The receiving system used for digital broadcasting defined in example 10 or 17, wherein if there is a frequency fk used to transmit the pilot signal from the transmission system and the maximum frequency shift $\Delta F_m$ to be expected in said receiving system is represented as $| \Delta F_m | \leq (1 + 2h) / (2NT)$ using a positive integer h and the interval $1/(NT)$ of the frequencies transmitted from the transmission system, then the Fourier transformation is carried out only within the frequency range of $f_k- (h + 1) / (NT)$ for $f_k + (h + 1) / (NT)$, which is the neighborhood of said pilot signal, to acquire the timing or frequency synchronization, or both synchronizations.

**Claims**

1. An OFDM modulated transmission system using a plurality of frequencies which are set orthogonally to each other and which are transmitted with a frequency interval of 1/NT
   wherein the transmission system transmits a pilot signal comprising two or more frequencies selected from said plurality of transmission frequencies whereby the frequency interval between a first frequency of said pilot signal and a second frequency of said pilot signal, which is nearest to said first frequency, is at least four times the frequency interval 1/NT.

2. An OFDM modulated transmission system according to claim 1 wherein the OFDM modulated transmission system transmits a plurality of symbols comprising a pilot symbol (53) and one or more data symbols (55) whereby the pilot symbol comprises said pilot signal.

3. An OFDM modulated transmission system according to claim 2 whereby said pilot symbol has a fixed time interval.

4. An OFDM modulated transmission system according to claim 2 whereby the pilot symbol comprises no other data than the pilot signal.

5. A receiving system for receiving a signal transmitted by the transmission system according to one of the preceding claims.

6. A method for transmitting an OFDM modulated signal using using a plurality of frequencies which are set orthogonally to each other and which are transmitted with a frequency interval of 1/NT
   whereby the method includes the transmission of a pilot signal comprising two or more frequencies selected from said plurality of transmission frequencies
   and whereby the frequency interval between a first frequency of said pilot signal and a second frequency of said pilot signal, which is nearest to said first frequency, is at least four times the frequency interval 1/NT.

7. A method for transmitting an OFDM modulated signal according to claim 6 whereby the method further includes the transmission of a plurality of symbols comprising a pilot symbol (53) and one or more data symbols (55) whereby the pilot symbol comprises said pilot signal.

8. A method for transmitting an OFDM modulated signal according to claim 7 whereby said pilot symbol has a fixed time interval.

9. A method for transmitting an OFDM modulated signal according to claim 7 whereby the pilot symbol comprises no other data than the pilot signal.

10. A method for receiving an OFDM modulated signal transmitted according to one of the methods of claims 6 to 9.

FIG. 1a

## FIG. 2

1 SYMBOL

| FRAME SYNCHRONI-ZATION SYMBOL | PILOT SYMBOL | | | | | | |

52   53

55 DATA SYMBOL

51 FRAME

## FIG. 3

C2=1   C12=1

CK

1

0

K=0   K=31

FREQUENCY INDEX

# FIG. 4

*2a*

FIG. 4 block diagram with blocks: 201 (antenna), 202, 203, 205 BPF, 206, 207 A/D CONVERTER, 204 LOCAL OSCILLATOR, CHANNEL SELECTION SIGNAL, 210 AGC, 227 PILOT SYMBOL DETECTOR, 208 PHASE SPLITTER, 209 INTER-POLATOR, 211 SAMPLING TIMING CONTROLLER, 212, 213 FREQUENCY/PHASE CORRECTION CONTROLLER, 214a, 214b, 215, 216 WINDOW FUNCTION GENERATOR, 217 S/P CONVERTER, 218 FAST FOURIER TRANSFORMER, 219 FREQUENCY/PHASE ESTIMATOR, 220 P/S CONVERTER, 224 COMMUNICATION CHANNEL DECODER, 225 DEMULTIPLEXER, 226 INFORMATION SOURCE DECODER, OUTPUT.

EP 1 267 537 A2

19

# FIG. 5

EP 1 267 537 A2

# FIG. 6

## 2b

EP 1 267 537 A2